# EUROPEAN PATENT SPECIFICATION

(11) **EP 2 923 857 B1**
(45) Date of publication and mention of the grant of the patent: **01.11.2017**
(21) Application number: 15161182.9
(22) Date of filing: 26.03.2015
(51) Int. Cl.: B44C 1/18, B44C 3/00, B44C 5/00

(54) **METHOD FOR COATING AN ARTICLE**
VERFAHREN ZUR BESCHICHTUNG EINES ARTIKELS
PROCÉDÉ POUR LE REVÊTEMENT D'UN ARTICLE

(30) Priority: 26.03.2014 ES 201430426
(43) Date of publication of application: 30.09.2015
(73) Proprietor: Arjona Carmona, Francisco, 14910 Benameji, Córdoba (ES); Cabello Royón, Juan, 14910 Benameji, Córdoba (ES)
(72) Inventor: Arjona Carmona, Francisco, 14910 Benameji, Córdoba (ES); Cabello Royón, Juan, 14910 Benameji, Córdoba (ES)
(74) Representative: Pons

(56) References cited:
- FR-A- 1 289 502
- GB-A- 404 757
- US-A1- 2007 295 448

## Description

### OBJECT OF THE INVENTION

The present invention is included within the field of the coating of items; particularly, but not exclusively, items made of wood, such as furniture, doors and windows, the covering of facings (laminate flooring materials, wall and ceiling panelling), decorative household items (picture frames, lamps...) etc. Specifically, the object of the invention is a procedure for the execution of a coating on said items.

### BACKGROUND OF THE INVENTION

In order to provide protection against knocks, scratches, normal wear or the action of the environment, and/or to provide a decorative finish, etc., many items in everyday use are coated or sheathed. For example, the boards forming pieces of furniture are finished with edging and corner pieces which are both protective and decorative; picture frames may be coated with small items such as stones, shells, etc., to provide a more eye-catching finish; walls may be covered with cork sheeting in order to improve acoustic properties, etc.

### DESCRIPTION OF THE INVENTION

The use of olive stones in decorative, as per the preamble of claim 1, is known from FR-A-1.289.502. The present invention describes a procedure for coating an item, providing a stylish, durable finish by means of the use of a renewable material, this being olive stones; said procedure is not included in the state of the art.

The procedure considered in the present invention is characterised by the use of crushed olive stones. Olive stones may be sourced in abundance as a by-product of the olive industry. For example, they may be sourced, usually whole, from table olive pitting processes; also from the manufacture of olive oil. For example, during the extraction process of virgin olive oil in the oil press, a by-product called pomace is generated; this comprises remains of skin, pulp, olive stones and water. At the olive press, the wet crushed olive stones and skin are extracted from the wet pomace by wet pitting machines. In the case of the pitting of table olives, the olive stone, in addition to being cleaned ad dried, should also be crushed.

Usually, crushed olive stones, once cleaned of olive skin and dried, are used as fuel in biomass combustion stoves and boilers. Thus, the present invention consists additionally of an alternative use for the olive stones generated at the olive presses, other than that of fuel.

The invention relates to the spraying of olive stones, subsequent to their cleaning, drying (preferably to humidity values below 12%) and crushing, on the item to be coated, to which an adhesive has been priorly applied, so as to affix the olive stones. Subsequently, preferably and optionally, the adhesive is allowed to dry and the olive stones are then sanded in order to obtain a smooth olive stone surface.

The use of olive stones as a coating is of particular, although not exclusive, interest in the manufacture of items in wood, such as furniture, kitchen worktops, doors, windows, coverings for floors, walls and ceilings, decorative household items (such as pictures, picture frames, lamps, etc.), as it provides a most stylish decorative effect, while also providing protection against wear, knocks, scratches, dampness, etc. Items made of materials other than wood may also be coated with olive stones by using the procedure of the invention, conditioned by the use of adhesives which work appropriately with olive stones and with the particular material of which the item is made.

### DESCRIPTION OF THE DRAWINGS

As a supplement to the description made herein, and for the purpose of aiding the better understanding of the characteristics of the invention, in accordance with a preferred example of a practical embodiment of the same, a set of drawings is attached as an integral part of said description wherein, by way of illustration and not limitation, the following is portrayed:

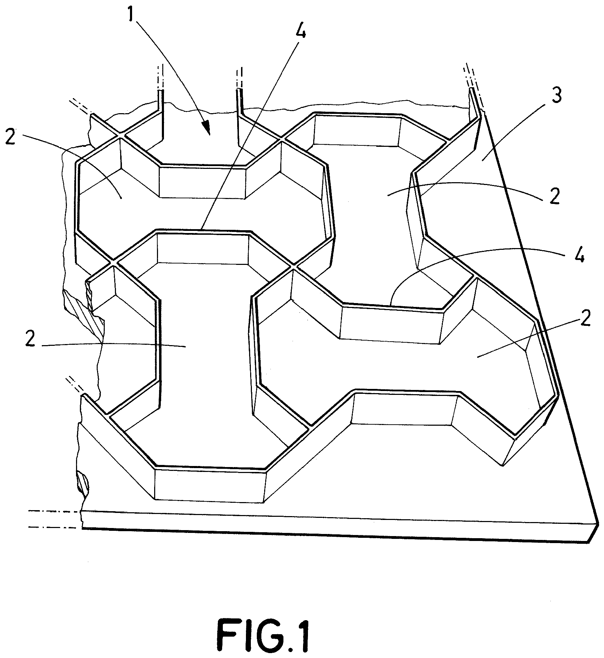

Figure 1.- Portrays a schematic representation of the use of a mould for the case of spraying non-uniformly sized olive stones.

### PREFERRED EMBODIMENT OF THE INVENTION

A preferred embodiment of the procedure of the invention is described in greater detail below, with the aid of the single attached and aforementioned figure 1.

The procedure for the coating of an item (3) in accordance with the present invention comprises the essential stages of applying an adhesive to the item (3) and spraying clean, dried, crushed olive stones on the adhesive, in order that the olive stones may adhere to the item (3). Subsequently, the adhesive is dried, either spontaneously or forcibly. Next, the olive stones are sanded in order to obtain a smooth olive stone surface.

Preferably, the item (3) is made of wood, e.g. wooden MDF/HDF/OSB board, etc.; in this way the adhesive may preferably be vinyl glue, also called "white glue", i.e. "carpenter's glue", made from polyvinyl acetate. In the case of items (3) made from materials other than wood, different alternative adhesives of varying types may be used.

Olive stones usually come from the olive industry, and therefore are crushed and wet at source, and contain remnants of olive skin. For this reason, it is habitual to subject them to washing/cleaning and/or drying operations prior to their use as a coating. By way of an example, it is stated that humidity levels below 12% are acceptable.

As is generally known in the field of coating materials, the surface of the item (3) to be coated may be prepared beforehand, in such a way that optionally the surface may be subjected priorly to preparatory work such as e.g. washing/cleaning, sanding, polishing, painting, varnishing, lacquering, the application of a pore sealant, application of a patina, cleaning the patina, etc. The purpose of some of this preparatory work, such as e.g. the washing, cleaning, polishing and sanding, may be merely cleanliness, or facilitating the adherence of the adhesive. The purpose of other preparatory work, such as painting, lacquering or varnishing, may be merely decorative.

Regarding the choice of adhesive, several criteria may be held present. The first, and most important, is that the adhesive employed must be compatible with the olive stones and with the material of which the item (3) is made (or, where applicable, with a product such as paint, varnish, etc. which may have been employed in the preparatory work). Other criteria to be borne in mind may be the colour or texture of the adhesive, as different colours (including clear) and textures yield highly different appearances. The use of ecological and/or environmentally friendly adhesives should also be borne in mind.

Another variable to be monitored in the obtaining of different effects is the size of the crushed olive stones. The size of crushed olive stones normally varies between 1 mm and 7 mm, but olive stones whose size is within a larger range may also be used, for example between 0.05 mm and 15 mm. Crushed olive stones of uniform sizes may be employed, for example by means of the use of a screen. Conversely, it is also possible to spray olive stones of non-uniform sizes. Herein, "uniform size" is understood to be a range of sizes corresponding to the olive stones which have obtained a same result in a process of classification by size. For example, if a screen with sizes of 2, 3 and 5 mm is used, the olive stones which, during sifting, reach the 3 mm stage are considered to be all of the same uniform size, corresponding to the 3 mm classification.

An example of the spraying of stones of non-uniform size is to spray a mixture of crushed olive stones, where the mixture consists of stones of different sizes. Another example is to divide the item (3) into sections, spraying combinations of different uniform sizes on different sections.

Herein, whenever we execute the general procedure (applying adhesive to the item, spraying it with clean, dry crushed olive stones, allowing to dry and then sanding the olive stones) we shall be describing the realisation of a single layer of coating of olive stones. The thickness of this coating is defined by the process itself. Once the olive stones have been sprayed on the adhesive, preferably the olive stone is spread out and is then subjected to a slight compacting; the item (3) is then immediately upturned, in order that all the surplus of the sprayed stones which are not in contact with the adhesive may become detached due to gravity and with the aid, where necessary, of slight vibration. The item (3) is then once again placed in its initial position and finally the stones which have not become detached and which continue to adhere are slightly compacted once more. Subsequent to the drying of the adhesive, the surface formed by the olive stones is sanded.

As a consequence of sanding the olive stones once the adhesive has dried, preferably between 20% and 90%, and more preferably between 20% and 80% of the thickness of the olive stones has been removed. The greater the thickness sanded, as far as half of the same, the less roughness to the touch will be presented by the resulting surface, as the remaining thickness of the olive stones will be less and they will therefore feature a smaller quantity of rough external surface.

As an alternative to the application of a single layer of olive stones, optionally the consecutive application of a plurality of layers of olive stones is also contemplated. In this way, subsequent to the application of a particular layer of olive stones the adhesive is allowed to dry, the layer of olive stones is sanded and adhesive is applied once more. The next layer of olive stones is then sprayed and the aforementioned steps are repeated consecutively until all the required layers of olive stones have been applied. The preferred embodiment described is applicable when it is desired to obtain a thickness of olive stone coating greater than that of the olive stones employed.

Analogously to the above mention of the preparatory work, the item (3) may be posteriorly treated once the olive stones have been sanded. Therefore, finishing works are contemplated; these may be performed on the item (3) subsequent to the drying of the adhesive. Among the finishing works, the following may be highlighted:
- Painting at least part of the olive stones and, optionally, the surface of the item (3);
- Sanding the olive stones, in order to recover the natural colour of the olive stones at the sanded area;
- Varnishing and lacquering, to protect the item (3) and/or to provide an additional stylish effect;
- Applying a pore sealant for waterproofing;
- Applying a patina; and
- Cleaning the patina.

In accordance with a first preferred embodiment of the invention, an item (3) made of wood (MDF or HDF, for example) is coated by following the procedure of the present invention, in accordance with the following sequence of stages:
- Preparation of the item (3) by means of a first sanding and subsequent cleaning for example by blowing, to eliminate the dust produced by the first sanding;
- Application of a first coat of paint to the sanded item (3), to endow the item (3) with a colour different from its original colour; if it is desired that the original colour of the item (3) should remain visible, this first painting stage should preferably be omitted;
- Application of (preferably transparent-drying) "white glue" or "carpenter's glue", made from polyvinyl acetate to the item (3); alternatively, other types of adhesive may be sprayed, e.g. adhesives considered to be ecological due to their not containing environmentally harmful additives, or adhesives containing graphene, due to their greater adhesive properties, in addition to their being environmentally friendly;
- Spraying, over the carpenter's glue, or over the chosen adhesive, a layer of clean, dried, crushed olive stones of a uniform size (for example, those which pass through a 3 mm screen); optionally, subsequent to spraying the stones over the adhesive, the olive stones may be spread out over the item (3); likewise, a slight compacting of the olive stones may be performed, pressing said olive stones against the adhesive, in order to increase the surface of adhesive coated with olive stones; likewise, optionally, the surplus of stones, this being the stones which have not come into contact with the adhesive, may subsequently be removed for example by upturning the item (3) for the surplus of stones to become detached; likewise, where applicable, after removing the surplus stones, the adhesive may be allowed to harden (for example, during ten or fifteen minutes) to enable the affixing of the olive stones to the item (3); subsequently, the olive stones are moistened, for example by the application of a diluted adhesive; the purpose of the stage of allowing the adhesive to harden is to prevent the olive stones from becoming detached from the item (3) during the moistening stage;
- Allowing the adhesive to dry naturally, for example between 24 and 48 hours, for the adhesive to harden and to provide better affixing of the olive stones to the item (3);
- Sanding the olive stones, generating a smooth surface of olive stones, where generally the thickness of the layer of olive stones once sanded is between 1 mm and 1.6 mm; according to how thickly the olive stones have been sprayed, blanks/clearings will have been generated among the olive stones, which reveal a greater or lesser surface painted during the first painting stage; preferably, a second cleaning should be performed subsequent to the second sanding; at this point, in accordance with a preferred embodiment, the procedure might be considered complete, only the application of finishing work remaining, such as cleaning, engraving a design in the olive stones, applying a pore sealant (also called primer), painting, applying a patina, cleaning the patina and applying varnish and/or lacquer.

In accordance with the embodiment described, a stylish effect is achieved, defined by:
- The colour applied to the item (3) during the first painting stage (if the glue is not transparent, the colour of the glue will be visible and not that of the item (3));
- The colour of the external surface of the olive stones, applied during the second painting stage;
- The natural colour of the olive stones, obtained during the third sanding; and
- Optionally, the colour provided by the second painting stage, also visible at the areas of olive stones not affected by the third sanding.

As has been explained above, olive stones either of uniform size or of non-uniform size may be sprayed. In the case of stones of non-uniform size, preferably olive stones should be sprayed on different areas of the item (3), where at a single area the olive stones sprayed are of uniform size, the sizes on at least two of the different areas being mutually different.

In accordance with a first preferred embodiment of spraying non-uniformly sized stones, the steps of the example concerning uniformly-sized stones explained above are applicable, in a sequential manner for each of the areas. For example, adhesive is applied to one area, the stones are sprayed on said area and said area is sanded. Subsequently, the operation is performed on another area using olive stones of a different size, etc.

In accordance with a second preferred embodiment of spraying non-uniformly sized stones, the example concerning uniformly-sized stones may be applied to several areas simultaneously, by means of the use of a mould (1) divided into compartments (2) which is placed over the item (3), preferably subsequent to the application of the adhesive to the item (3). In the example portrayed in figure 1, the mould (1) features thin walls (4), for example of a thickness of approximately 1.5 mm, the height of the mould (1) being approximately 2-3 cm. Each compartment (2) corresponds to one of the areas. When the adhesive has dried, the mould (1) is removed and the operation continues as in the procedure described above for embodiments of uniform size.

In any of the examples described, and particularly in the examples concerning non-uniformly sized stones, a design may be engraved in the coating, for example using a numerically-controlled mill. Preferably, in the case of non-uniformly sized stones, the design may correspond to the borders between the different areas.

Different options for the production of a finish are explained below:
1.-
   - the application of a transparent pore sealant;
   - the application of coloured patinas to at least the sanded part, i.e. the sanded surface of the olive stones;
   - the cleaning of the patina from the sanded surface of the olive stones, to reveal the natural colour of the olive stones;
   - the application of lacquer or varnish, to fix the natural colour of the olive stones and of the patina.
2.-
   - the application of a transparent pore sealant;
   - the application of paint and allowing the paint to dry;
   - the application of coloured patinas and allowing the patina(s) to dry;
   - the removal of the patina(s), for example by means of a sponge or scouring pad, from the sanded surface of the olive stones, having obtained two different colours from the natural colour of the olive stones;
   - the application of lacquer or varnish, to fix the colours. 3.-
   - placing the mould (1) over the priorly applied adhesive;
   - spraying olive stones of priorly selected sizes on each area;
   - removing the mould;
   - once the adhesive is dry, the olive stones are sanded;
   - engraving, to repass the areas defined by the mould (1), and cleaning;
   - applying either of finishes 1 and 2.

Two particularly preferred embodiments are described in full detail below, the first using uniformly-sized olive stones of a single size, and the second using stones of different sizes and using a mould (1).

In the first embodiment, the steps are as follows:
- Commencing with an item (3) made of wood;
- Sanding the item (3) and cleaning said item (3) in order to eliminate the particles generated by the sanding;
- Applying adhesive, preferably a carpenter's glue of the type comprised of vinyl polyacetate, to the sanded, cleaned item (3);
- Spraying uniformly-sized olive stones -for example, subsequent to having been passed through the same stage of a screen- on the adhesive;
- Spreading the olive stones over the adhesive in order to distribute said olive stones;
- Compacting the olive stones;
- Removing the surplus olive stones, for example by upturning the item (3) and, where applicable, applying vibration;
- Compacting the olive stones once again;
- Allowing the adhesive to dry and harden;
- Sanding the olive stones and cleaning the same;
- Engraving a design on the olive stones;
- Applying a pore sealant to the olive stones;
- Applying a patina to specific areas of the olive stones, comprising the sanded part of the olive stones;
- Cleaning the patina from said sanded part; and
- Applying lacquer or varnish.

In the second embodiment, the steps are as follows:
- Commencing with an item (3) made of wood;
- Sanding the item (3) and cleaning said item (3) in order to eliminate the particles generated by the sanding;
- Applying adhesive, preferably a carpenter's glue of the type comprised of polyvinyl acetate, to the sanded, cleaned item (3);
- Placing a mould (1) over the item (3) subsequent to the application of the adhesive, where the mould (1) is compartmentalised so as to define different areas;
- Spraying olive stones on the areas, where the olive stones of at least two of the areas feature different sizes;
- Removing the mould (1);
- Allowing the adhesive to dry;
- Sanding the olive stones and cleaning the same;
- Engraving a design on the olive stones;
- Applying a pore sealant to the olive stones;
- Applying a patina to specific areas of the olive stones, comprising the sanded part of the olive stones;
- Cleaning the patina from said sanded part; and
- Applying lacquer or varnish.

## Claims

1. A procedure for the coating of an item (3), **characterised in that** it comprises the following stages:
- application of adhesive to the item (3);
- spraying cleaned, dried, crushed olive stones on the adhesive, in order to affix the olive stones to the item (3); and
- drying of the adhesive.

2. A procedure for the coating of an item (3), as claimed in claim 1, **characterised in that** it comprises an additional stage of sanding the olive stones once the adhesive is dry, in order to obtain a smooth surface of olive stones.

3. A procedure for the coating of an item (3), as claimed in either of claims 1 and 2, **characterised in that** several layers of olive stones are sprayed consecutively, and **in that** it comprises the following additional stages between the spraying of each two consecutive layers of olive stones:
- sanding the last layer of olive stones sprayed, once the adhesive is dry; and
- applying adhesive over the layer of olive stones sanded in the preceding stage.

4. A procedure for the coating of an item (3), as claimed in either of claims 1 and 2, **characterised in that** the stage of spraying olive stones comprises the spraying of a mixture of olive stones of a uniform size.

5. A procedure for the coating of an item (3), as claimed in either of claims 1 and 2, **characterised in that** the stage of spraying olive stones comprises the spraying of differently-sized olive stones.

6. A procedure for the coating of an item (3), as claimed in either of claims 1 and 2, **characterised in that** it additionally includes subjecting the item (3) to at least one preparatory stage prior to the application of the adhesive, where the preparatory stage(s) may be chosen between: washing, cleaning, sanding, polishing, painting, lacquering and varnishing, applying a pore sealant, applying a patina, and cleaning the patina.

7. A procedure for the coating of an item (3), as claimed in either of claims 1 and 2, **characterised in that** it additionally includes at least one finishing operation performed subsequently to the drying of the adhesive, wherein the finishing stage(s) may be chosen between:
- painting at least part of the olive stones;
- varnishing and/or lacquering the item (3);
- applying a patina;
- cleaning the patina; and
- applying a pore sealant.

8. A procedure for the coating of an item (3), as claimed in either of claims 1 and 2, **characterised in that** the item (3) is made of wood, and **in that** the adhesive is comprised of carpenter's glue (polyvinyl acetate).

9. A procedure for the coating of an item (3), as claimed in either of claims 1 and 2, **characterised in that** it further comprises the following stages:
- spreading the sprayed olive stones;
- compacting the olive stones;
- removing, for example by upturning the item (3), the surplus olive stones, to cause all the surplus olive stones sprayed and not in contact with the adhesive to become detached by gravity, aided preferably by the application of vibration;
- placing the item (3) once again in its initial position; and
- compacting once again the olive stones which continue to adhere and which have not become detached.

10. A procedure for the coating of an item (3), as claimed in claim 1, **characterised in that** it includes an additional stage of moistening the olive stones sprayed on the adhesive, for example by applying a diluted adhesive to the olive stones.

11. A procedure for the coating of an item (3), as claimed in claims 2 and 7, **characterised in that** the finishing operation is a painting operation which comprises the following stages:
- defining a design on the olive stones;
- applying a pigment, such as a coat of paint and/or a patina (i.e. a pigment which is removable without need for chemical solvents), to the design, on both the smooth and the non-smooth surfaces of the olive stones; and
- removing the pigment from the smooth surface.

12. A procedure for the coating of an item (3), as claimed in claim 3, **characterised in that** olive stones are sprayed on different areas of the item (3), where at a single area the olive stones sprayed are of uniform size, the sizes of at least two of the different areas being mutually different; the olive stone spraying stage comprising the placing on the item (3) of a mould (1) divided into compartments (2), preferably subsequent to the application of the adhesive on the item (3), where each compartment (2) corresponds to one of the areas; said mould (1) being removed when the olive stones are affixed to the item (3).

13. A procedure for the coating of an item (3), as claimed in any one of the preceding claims, **characterised in that** it additionally comprises a final stage of engraving a design on the olive stones.

14. A procedure for the coating of an item (3), as claimed in claims 12 and 13, **characterised in that** the design corresponds with the borders between the different areas.

15. A procedure for the coating of an item (3), as claimed in claim 1, **characterised in that** it comprises the following stages:
- commencing with an item (3) made of wood;
- sanding the item (3) and cleaning said item (3) in order to eliminate the particles generated by the sanding;
- applying adhesive, preferably a carpenter's glue of the type comprised of polyvinyl acetate, to the sanded, cleaned item (3);
- spraying uniformly-sized olive stones -for example, subsequent to their passage through the same stage of a screen- on the adhesive;
- spreading the olive stones over the adhesive in order to distribute said olive stones;
- compacting the olive stones;
- removing the surplus olive stones, for example by upturning the item (3) and, where applicable, applying vibration;
- compacting the olive stones once again;
- optionally moistening the surface;
- allowing the adhesive to dry and harden;
- sanding the olive stones and cleaning the same;
- engraving a design on the olive stones and cleaning the same;
- applying a pore sealant to the olive stones;
- applying a patina to specific areas of the olive stones, comprising the sanded part of the olive stones;
- cleaning the patina from said sanded part; and
- applying lacquer or varnish.

16. A procedure for the coating of an item (3), as claimed in claim 1, **characterised in that** it comprises the following stages:
- commencing with an item (3) made of wood;
- sanding the item (3) and cleaning said item (3) in order to eliminate the particles generated by the sanding;
- applying adhesive, preferably a carpenter's glue of the type comprised of polyvinyl acetate, to the sanded, cleaned item (3);
- placing a mould (1) over the item (3) subsequent to the application of the adhesive, where the mould (1) is compartmentalised so as to define different areas;
- spraying olive stones on the areas, where the olive stones of at least two of the areas present different sizes;
- removing the mould (1);
- optionally moistening the surface;
- allowing the adhesive to dry;
- sanding the olive stones and cleaning the same;
- engraving a design on the olive stones;
- applying a pore sealant to the olive stones;
- applying a patina to specific areas of the olive stones, comprising the sanded part of the olive stones;
- cleaning the patina from said sanded part; and
- applying lacquer or varnish.

## Patentansprüche

1. Verfahren zur Beschichtung eines Artikels (3), **dadurch gekennzeichnet, dass** es die folgenden Stufen umfasst:
- Aufbringen von Klebstoff auf den Artikel (3),
- Aufspritzen von gereinigten, getrockneten, zerkleinerten Olivenkernen auf den Klebstoff, um die Olivenkerne auf dem Artikel (3) anzubringen und
- Trocknen des Klebstoffes.

2. Verfahren zur Beschichtung eines Artikels (3) nach Anspruch 1, **dadurch gekennzeichnet, dass** es eine zusätzliche Stufe des Schleifens der Olivenkerne umfasst, sobald der Klebstoff trocken ist, um eine glatte Oberfläche von Olivenkernen zu erhalten.

3. Verfahren zur Beschichtung eines Artikels (3) nach einem der Ansprüche 1 und 2, **dadurch gekennzeichnet, dass** mehrere Schichten von Olivenkernen nacheinander aufgespritzt werden und dass es die folgenden zusätzlichen Stufen zwischen dem Aufspritzen von jeweils zwei aufeinanderfolgenden Schichten von Olivenkernen umfasst:
- Schleifen der letzten Schicht von aufgespritzten Olivenkernen, sobald der Klebstoff trocken ist, und
- Aufbringen von Klebstoff auf die Schicht von in der vorhergehenden Stufe geschliffenen Olivenkernen.

4. Verfahren zur Beschichtung eines Artikels (3) nach einem der Ansprüche 1 und 2, **dadurch gekennzeichnet, dass** die Stufe des Aufspritzens von Olivenkernen das Aufspritzen einer Mischung von Olivenkernen von einheitlicher Größe umfasst.

5. Verfahren zur Beschichtung eines Artikels (3) nach einem der Ansprüche 1 und 2, **dadurch gekennzeichnet, dass** die Stufe des Aufspritzens von Olivenkernen das Aufspritzen von unterschiedlich großen Olivenkernen umfasst.

6. Verfahren zur Beschichtung eines Artikels (3) nach einem der Ansprüche 1 und 2, **dadurch gekennzeichnet, dass** es zusätzlich das Unterwerfen des Artikels (3) mindestens einer Vorbereitungsstufe vor dem Aufbringen des Klebstoffes umfasst, wobei die Vorbereitungsstufe(n) aus Folgendem ausgewählt werden kann (können): Waschen, Reinigen, Schleifen, Polieren, Anmalen, Lackieren und Firnissen, Aufbringen eines Porenabdichtmittels, Aufbringen einer Patina und Reinigen der Patina.

7. Verfahren zur Beschichtung eines Artikels (3) nach einem der Ansprüche 1 und 2, **dadurch gekennzeichnet, dass** es zusätzlich mindestens eine Endbearbeitung, die im Anschluss an das Trocknen des Klebstoffes durchgeführt wird, umfasst, wobei die Fertigbearbeitungsstufe(n) aus Folgendem ausgewählt werden kann (können):
- Anmalen mindestens eines Teils der Olivenkerne,
- Firnissen und/oder Lackieren des Artikels (3),
- Aufbringen einer Patina,
- Reinigen der Patina und
- Aufbringen eines Porenabdichtmittels.

8. Verfahren zur Beschichtung eines Artikels (3) nach einem der Ansprüche 1 und 2, **dadurch gekennzeichnet, dass** der Artikel (3) aus Holz hergestellt ist und dass der Klebstoff aus Tischlerleim (Polyvinylacetat) besteht.

9. Verfahren zur Beschichtung eines Artikels (3) nach einem der Ansprüche 1 und 2, **dadurch gekennzeichnet, dass** es ferner die folgenden Stufen umfasst:
- Ausbreiten der aufgespritzten Olivenkerne,
- Verdichten der Olivenkerne,
- Entfernen, beispielsweise durch das Umdrehen des Artikels (3), der überschüssigen Olivenkerne, um das Ablösen aller Olivenkerne, die überschüssig aufgespritzt und nicht in Kontakt mit dem Klebstoff sind, durch Schwerkraft, die vorzugsweise durch Anwendung von Vibration gefördert wird, zu bewirken,
- erneutes Anordnen des Artikels (3) in seiner Ausgangsposition und
- erneutes Verdichten der Olivenkerne, die weiterhin anhaften und die nicht abgelöst werden sollen.

10. Verfahren zur Beschichtung eines Artikels (3) nach Anspruch 1, **dadurch gekennzeichnet, dass** es eine zusätzliche Stufe des Befeuchtens der auf dem Klebstoff aufgespritzten Olivenkerne, beispielsweise durch das Aufbringen eines verdünnten Klebstoffes auf die Olivenkerne, enthält.

11. Verfahren zur Beschichtung eines Artikels (3) nach den Ansprüchen 2 und 7, **dadurch gekennzeichnet, dass** die Endbearbeitung ein Malvorgang ist, welcher die folgenden Stufen umfasst:
- Bestimmen eines Musters auf den Olivenkernen,
- Aufbringen eines Pigments, wie einer Farbschicht und/oder einer Patina (d. h. eines Pigments, welches entfernbar ist, ohne dass chemische Lösungsmittel erforderlich sind) auf dem Muster, sowohl auf den glatten als auch den nicht glatten Oberflächen der Olivenkerne und
- Entfernen des Pigments von der glatten Oberfläche.

12. Verfahren zur Beschichtung eines Artikels (3) nach Anspruch 3, **dadurch gekennzeichnet, dass** Olivenkerne auf verschiedene Flächen des Artikels (3) aufgespritzt werden, wobei die aufgespritzten Olivenkerne auf einer einzelnen Fläche einheitlicher Größe sind, die Größen von mindestens zwei der verschiedenen Flächen voneinander unterschiedlich sind, wobei die Stufe des Aufspritzens der Olivenkerne das Anordnen einer Form (1), welche in Kammern (2) unterteilt ist, auf dem Artikel (3) vorzugsweise im Anschluss an das Aufbringen des Klebstoffes auf den Artikel (3) umfasst, wobei jede Kammer (2) einer der Flächen entspricht, wobei die Form (1) entfernt wird, wenn die Olivenkerne auf dem Artikel (3) angebracht sind.

13. Verfahren zur Beschichtung eines Artikels (3) nach einem der vorhergehenden Ansprüche, **dadurch gekennzeichnet, dass** es zusätzlich eine Endstufe des Gravierens eines Musters in die Olivenkernen umfasst.

14. Verfahren zur Beschichtung eines Artikels (3) nach Anspruch 12 und 13, **dadurch gekennzeichnet, dass** das Muster den Grenzen zwischen den verschiedenen Flächen entspricht.

15. Verfahren zur Beschichtung eines Artikels (3) nach Anspruch 1, **dadurch gekennzeichnet, dass** es die folgenden Stufen umfasst:
- Beginnen mit einem aus Holz hergestellten Artikel (3),
- Schleifen des Artikels (3) und Reinigen des Artikels (3), um die durch das Schleifen erzeugten Teilchen zu beseitigen,
- Aufbringen von Klebstoff, vorzugsweise einem Tischlerleim des Typs, der aus Polyvinylacetat besteht, auf den geschliffenen, gereinigten Artikel (3),
- Aufspritzen von gleichmäßig großen Olivenkernen, beispielsweise im Anschluss an ihren Durchgang durch ein Sieb in der gleichen Stufe, auf den Klebstoff,
- Ausbreiten der Olivenkerne über den Klebstoff, um die Olivenkerne zu verteilen,
- Verdichten der Olivenkerne,
- Entfernen der überschüssigen Olivenkerne, zum Beispiel durch das Umdrehen des Artikels (3) und gegebenenfalls die Anwendung von Vibration,
- erneutes Verdichten der Olivenkerne,
- gegebenenfalls Befeuchten der Oberfläche,
- Ermöglichen, dass der Klebstoff trocknet und aushärtet,
- Schleifen der Olivenkerne und ihr Reinigen,
- Gravieren eines Musters in die Olivenkerne und ihr Reinigen,
- Aufbringen eines Porenabdichtmittels auf die Olivenkerne,
- Aufbringen einer Patina auf bestimmte Flächen der Olivenkerne, die den geschliffenen Teil der Olivenkerne umfassen,
- Reinigen der Patina von dem geschliffenen Teil und
- Aufbringen eines Lacks oder Firnisses.

16. Verfahren zur Beschichtung eines Artikels (3) nach Anspruch 1, **dadurch gekennzeichnet, dass** es die folgenden Stufen umfasst:
- Beginnen mit einem aus Holz hergestellten Artikel (3),
- Schleifen des Artikels (3) und Reinigen des Artikels (3), um die durch das Schleifen erzeugten Teilchen zu beseitigen,
- Aufbringen von Klebstoff, vorzugsweise einem Tischlerleim des Typs, der aus Polyvinylacetat besteht, auf den geschliffenen, gereinigten Artikel (3),
- Anordnen einer Form (1) auf dem Artikel (3) im Anschluss an das Aufbringen des Klebstoffes, wobei die Form (1) unterteilt wird, um verschiedene Flächen zu bestimmen,
- Aufspritzen von Olivenkernen auf die Flächen, wobei die Olivenkerne von mindestens zwei der Flächen verschiedene Größen präsentieren,
- Entfernen der Form (1),
- gegebenenfalls Befeuchten der Oberfläche,
- Ermöglichen, dass der Klebstoff trocknet,
- Schleifen der Olivenkerne und ihr Reinigen,
- Gravieren eines Musters in die Olivenkerne,
- Aufbringen eines Porenabdichtmittels auf die Olivenkerne,
- Aufbringen einer Patina auf bestimmte Flächen der Olivenkerne, die den geschliffenen Teil der Olivenkerne umfassen,
- Reinigen der Patina von dem geschliffenen Teil und
- Aufbringen eines Lacks oder Firnisses.

## Revendications

1. Procédé de revêtement d'un article (3), **caractérisé en ce qu'**il comprend les étapes suivantes :
- application d'adhésif sur l'article (3) ;
- pulvérisation des noyaux d'olive nettoyés, séchés, écrasés sur l'adhésif, afin d'apposer les noyaux d'olive sur l'article (3) ; et
- séchage de l'adhésif.

2. Procédé de revêtement d'un article (3), selon la revendication 1, **caractérisé en ce qu'**il comprend une étape supplémentaire de ponçage des noyaux d'olive une fois que l'adhésif est sec, afin d'obtenir une surface lisse de noyaux d'olive.

3. Procédé pour le revêtement d'un article (3), selon l'une quelconque des revendications 1 et 2, **caractérisé en ce que** plusieurs couches de noyaux d'olive sont pulvérisées consécutivement, et **en ce qu'**il comprend les étapes supplémentaires suivantes entre la pulvérisation de toutes les deux couches consécutives de noyaux d'olive :
- le ponçage de la dernière couche de noyaux d'olive pulvérisés, une fois que l'adhésif est sec ; et
- l'application d'adhésif sur la couche de noyaux d'olive poncés à l'étape précédente.

4. Procédé de revêtement d'un article (3), selon l'une quelconque des revendications 1 et 2, **caractérisé en ce que** l'étape de pulvérisation des noyaux d'olive comprend la pulvérisation d'un mélange de noyaux d'olive d'une taille uniforme.

5. Procédé de revêtement d'un article (3), selon l'une quelconque des revendications 1 et 2, **caractérisé en ce que** l'étape de pulvérisation des noyaux d'olive comprend la pulvérisation de noyaux d'olive d'une taille différente.

6. Procédé de revêtement d'un article (3), selon l'une quelconque des revendications 1 et 2, **caractérisé en ce qu'**il comprend en outre la soumission de l'article (3) à, au moins, une étape préparatoire avant l'application de l'adhésif, les étapes préparatoires pouvant être choisies parmi : le lavage, le nettoyage, le ponçage, le polissage, la peinture, le laquage et le vernissage, l'application d'un pore d'étanchéité, l'application d'une patine et le nettoyage de la patine.

7. Procédé de revêtement d'un article (3), selon l'une quelconque des revendications 1 et 2, **caractérisé en ce qu'**il comprend en outre, au moins, une opération de finition effectuée ultérieurement au séchage de l'adhésif, dans laquelle l'(les)étape(s) de finition peut (peuvent) être choisie(s) parmi :
- la peinture, d'au moins, une partie des noyaux d'olive ;
- le vernissage et/ou le laquage de l'article (3) ;
- l'application d'une patine ;
- le nettoyage de la patine ; et
- l'application d'un pore d'étanchéité.

8. Procédé de revêtement d'un article (3), selon l'une quelconque des revendications 1 et 2, **caractérisé en ce que** l'article (3) est fabriqué en bois et **en ce que** l'adhésif comprend de la colle à menuisier (acétate polyvinylique).

9. Procédé de revêtement d'un article (3), selon l'une quelconque des revendications 1 et 2, **caractérisé en ce qu'**il comprend, par ailleurs, les étapes suivantes :
- l'épandage des noyaux d'olive pulvérisés ;
- le compactage des noyaux d'olive ;
- l'élimination, par exemple, en renversant l'article (3), des noyaux d'olive excédentaires, pour permettre que tous les noyaux d'olive excédentaires pulvérisés et qui ne soient pas en contact avec l'adhésif soient détachés par gravité, aidée préférablement par l'application de vibrations ;
- le placement de l'article (3), à nouveau, dans sa position initiale ; et
- le compactage, encore une fois, des noyaux d'olive qui continuent à adhérer et qui n'ont pas été détachés.

10. Procédé de revêtement d'un article (3), selon la revendication 1, **caractérisé en ce qu'**il comprend une étape supplémentaire d'humidification des noyaux d'olive pulvérisés sur l'adhésif, par exemple, en appliquant un adhésif dilué sur les noyaux d'olive.

11. Procédé de revêtement d'un article (3), selon l'une quelconque des revendications 2 et 7, **caractérisé en ce que** l'opération de finition est une opération de peinture comprenant les étapes suivantes :
- la définition d'un dessin sur les noyaux d'olive ;
- l'application d'un pigment, tel qu'une couche de peinture et/ ou une patine (c'est-à-dire, un pigment amovible sans besoin de solvants chimiques), lors de la conception, sur les surfaces lisse et non lisse des noyaux d'olive ; et
- l'élimination du pigment de la surface lisse.

12. Procédé de revêtement d'un article (3), selon la revendication 3, **caractérisé en ce que** des noyaux d'olive sont pulvérisés sur différentes zones de l'article (3) où, dans une zone unique, les noyaux d'olive pulvérisés sont de taille uniforme, les tailles, d'au moins deux des différentes zones, étant mutuellement différentes ; l'étape de pulvérisation des noyaux d'olive comprenant la mise sur l'article (3) d'un moule (1) divisé en compartiments (2), de préférence après l'application de l'adhésif sur l'article (3), chaque compartiment (2) correspondant à l'une des zones ; ledit moule (1) étant retiré lorsque les noyaux d'olive sont fixés à l'article (3).

13. Procédé de revêtement d'un article (3), selon l'une quelconque des revendications précédentes, **caractérisé en ce qu'**il comprend, en outre, une étape finale de gravure d'un dessin sur les noyaux d'olive.

14. Procédé de revêtement d'un article (3), selon l'une quelconque des revendications 12 et 13, **caractérisé en ce que** le dessin correspond avec les bords des différentes zones.

15. Procédé de revêtement d'un article (3), selon la revendication 1, **caractérisé en ce qu'**il comprend les étapes suivantes :
- le commencement par un article (3) en bois ;
- le ponçage de l'article (3) et le nettoyage du dit article (3) afin d'éliminer les particules générées par le ponçage ;
- l'application d'un adhésif, de préférence, une colle à menuisier du type constitué d'acétate polyvinylique, à l'article poncé et nettoyé (3) ;
- la pulvérisation des noyaux d'olive de taille uniforme - par exemple, après leur passage à travers un écran dans la même étape - sur l'adhésif ;
- l'épandage des noyaux d'olive sur l'adhésif afin de distribuer lesdits noyaux d'olive ;
- le compactage des noyaux d'olive ;
- l'élimination des excès de noyaux d'olive, par exemple, en renversant l'article (3) et, le cas échéant, en appliquant des vibrations ;
- le compactage, encore une fois, des noyaux d'olive ;
- éventuellement, l'humidification de la surface ;
- le séchage et le durcissement de l'adhésif ;
- le ponçage des noyaux d'olive et le nettoyage de ces derniers ;
- la gravure d'un dessin sur les noyaux d'olive et le nettoyage de ces derniers ;
- l'application d'un pore d'étanchéité sur les noyaux d'olive ;
- l'application d'une patine sur des zones spécifiques des noyaux d'olive, comprenant la partie poncée des noyaux d'olive ;
- le nettoyage de la patine de ladite partie poncée ; et
- l'application d'un laquage ou d'un vernis.

16. Procédé de revêtement d'un article (3), selon la revendication 1, **caractérisé en ce qu'**il comprend les étapes suivantes :
- le commencement par un article (3) en bois ;
- le ponçage de l'article (3) et le nettoyage du dit article (3) afin d'éliminer les particules générées par le ponçage ;
- l'application d'un adhésif, de préférence, une colle à menuisier du type constitué d'acétate polyvinylique, à l'article poncé et nettoyé (3) ;
- le placement d'un moule (1) sur l'article (3) après l'application de l'adhésif, où le moule (1) est compartimenté de manière à définir différentes zones ;
- la pulvérisation de noyaux d'olive sur les zones, où les noyaux d'olive, d'au moins deux des zones, présentent des tailles différentes ;
- le retrait du moule (1) ;
- éventuellement, l'humidification de la surface ;
- le séchage de l'adhésif ;
- le ponçage des noyaux d'olive et le nettoyage de ces derniers ;
- la gravure d'un dessin sur les noyaux d'olive ;
- l'application d'un pore d'étanchéité sur les noyaux d'olive ;
- l'application d'une patine sur des zones spécifiques des noyaux d'olive, comprenant la partie poncée des noyaux d'olive ;
- le nettoyage de la patine de ladite partie poncée ; et
- l'application d'un laquage ou d'un vernis.
